# EUROPEAN PATENT APPLICATION

(11) **EP 2 269 815 A1**
(43) Date of publication of application: **05.01.2011**
(21) Application number: 09380126.4
(22) Date of filing: 02.07.2009
(51) Int. Cl.: B32B 5/26, B32B 27/12, B32B 33/00, C05F 17/02

(54) **Tarpaulin for covering biodegradable material**

(71) Applicant: INCABO, S.A., 08226 Terrasa Barcelona (ES)
(72) Inventor: Aurell Massalle, Nuria, 08223 Terrassa (Barcelona) (ES); Ayats Murillo, 08223 Terrassa (Barcelona) (ES)
(74) Representative: Ungria Lopez, Javier

(57) **Abstract**

The covering tarpaulin is constituted by a three-layered structure, an upper layer (1), an intermediate layer (2), and a lower layer (3), the latter layer being the one in contact and superimposed on the corresponding biodegradable material (4) intended to be fermented to achieve its decomposition and thus obtain an agricultural fertilizer. The upper layer (1), and lower layer (3) are made in polyester fabric with quadrille weave, preferably in taslan yarn having water repellent, fire resistant and antibacterial characteristics, while the nature of the intermediate layer (2) is breathable and impermeable.

## Description

### OBJECT OF THE INVENTION

The present invention, according to the title of the present descriptive report, refers to a tarpaulin for covering biodegradable material that is subjected to an aerobic biological process in order to obtain "compost" to be used as a fertilizer for agricultural applications.

The object of the invention is to provide a textile structured tarpaulin to be used as covering material to favor the fermentation process of the biodegradable material which decomposition will provide said compost.

### BACKGROUND OF THE INVENTION

As it is generally known, composting is an aerobic biological process through which micro-organisms act on biodegradable material to allow obtaining compost, that is, an agricultural fertilizer used because it is a source of soil nutrients that also improves soil texture, contributes to reduce erosion and also helps plants to absorb water and nutrients.

Optimum temperature, moisture and oxygenation conditions are required to obtain a maximum performance from the waste composting process.

One way to achieve said optimum conditions is to use tarpaulins to cover the biodegradable material. The tarpaulin serves as barrier between the chamber that is created below it and the external environment, so in addition to fulfill the functions mentioned above, the tarpaulin protects the biodegradable material from rain water, since excessive moisture affects the fermentation process as negatively as desiccation.

It is also important for the compost-covering tarpaulins to be made in such a way that they can contain noisome smells and prevent them from being emitted into the environment.

In the same manner, for the aerobic process to be effective ventilation is necessary, and therefore the tarpaulin must be air-permeable, although such permeability must be low to control the process while being able to prevent said emanation of odors to the outside environment. This notwithstanding, it must be impermeable to water as mentioned before.

Known compost-covering tarpaulin are usually tarred and made of multilayered textile laminates, mainly an external non-woven fabric, interlinked; and an intermediate layer made of a hydrophilic or microporous membrane and a lower layer of knitted woven or non-woven fabric, an arrangement that makes the intermediate layer to be the one acting as a barrier against odors, germs and rain water, while also determining the permeability to air and water vapor.

Said membrane ages in a relatively short period of time, which causes its impermeability to rain water to diminish which entails the problems and disadvantages that may derive from this situation.

In this sense and in order to avoid the problems associated to said technique, European patent 1216145 may be quoted. This patent describes a cover for aerobic treatment of biodegradable material constituting a tarred tarpaulin that is impermeable to air and water vapor while also having the capacity to retain odors and even microbes, spores and recalcitrant microbial matter, as well as being impermeable to water and traction-resistant.

To provide these features, the tarpaulin or cover object of the European patent of invention 1216145 is constituted by a laminate that comprises a porous polymeric layer, adhered to it there is an interlinked fabric, a knitted fabric or a non-woven fabric, said laminate having an air-permeability coefficient between 15 and 50 m³/m²/h at a pressure differential of 200 Pa and a ret transpirability value lower than 15 m² per Pa/W, and preferably between 2 and 10 m² per Pa/W.

The polymeric layer of the laminate that constitutes the tarpaulin or cover is adhered to another interlinked fabric, a knitted fabric or a non-woven fabric that is the layer that faces directly the biodegradable material to be fermented.

### DESCRIPTION OF THE INVENTION

The covering tarpaulin object of the invention has a series of particularities and innovations from which considerable advantages and new features, compared with those currently used for the same ends.

In this sense, the actual tarpaulin is characterized because it comprises a textile structure having three layers, an upper layer an intermediate layer, and a lower layer, with the particularity that the upper layer and lower layer are made in high tenacity taslan polyester filament yarn fabric with 1100 dtex quadrille weave and having water repellent, fire resistant and antibacterial characteristics. Said fabric is sufficiently closed to obtain good resistance values but sufficiently opened to allow transpiration while minimizing capillarity.

The fabric of the upper or external layer is dyed and fixed while the fabric of the lower internal layer is washed and fixed.

The intermediate layer is embodied by a breathable and impermeable layer, both characteristics that are evidently acquired by the structure that comprises the compost covering tarpaulin as a whole, thus favoring the fermentation process of the biodegradable material that is intended to decompose in order to obtain compost or agricultural fertilizer.

The yarn used is a taslan yarn, that is, an air textured yarn used to achieve a voluminous structure that allows for frizzles and loops and other fine filament distortions. In addition, said type of yarn establishes small air chambers between the fibers, thus retaining the noisome smelling particles when they are deposited in said small air chambers and therefore contributing to a large extent to prevent bad odors from escaping outside.

The taslan yarn is textured by overfeeding the liquid delivered through a highly pressurized, at 9-10 bars, air jet to create frizzling, loops and a more natural appearance for the yarn. In this manner the aforementioned distortions are injected inside the structure of the yarn through the high turbulence conferred by the air jet to achieve the final structure of the texturized yarn.

The process by which the fire-resistant property is added to the tarpaulin is done immediately after the fabric is finished by applying the fire-resistant product using the Foulard method comprising a thermosol system that allows obtaining a permanent finishing, that can be used jointly with fluorocarbon resins and implementing a later rinse in order to attain a high solidity against rubbing action or friction.

In addition, during the composting process according to the invention, it is necessary to sanitize the material to destroy the pathogens that originate as a result of the prolonged effect of sustained high temperatures generated by the process, since the aerobic decomposition process undergone by the organic matter is highly isothermic. Therefore events of spontaneous combustion are usual in big piles taller than 1.5 m., since they contain a high percentage of combustible material.

For this reason the compost-covering tarpaulin must comprise fire-resistant material to prevent fire from propagating.

The antibacterial product will also be applied using a foularding process. This product helps minimizing bad odor emissions as well as the proliferation of bacteria and fungus on the surface which cause bad odors.

It should also be noted that applying the antibacterial product not only provides the benefits and/or qualities stated in the above paragraph but also provides greater tarpaulin resistance and durability.

The fabric used to materialize the upper and lower layers of the tarpaulin is obtained from a base of taslan yarn with quadrille weave used to increase the resistance to tears against any puncturing element or pulling forces the tarpaulin may be subjected to during use and handling, such as when being rolled on unrolled.

Lastly, the structure of the tarpaulin as described is permeable to the main components of air, although also having some capacity for NH3 retention both because of the pore size as for the film of water condensed on the inner surface of the membrane, where the soluble gaseous substances are retained, thus reducing odor-related environmental impacts by preventing bacterial proliferation on the surface.

In summary, the technical properties of the compost-covering tarpaulin object of the invention can be summarized as follows:
● High air permeability to ensure oxygen supply to the inside of the biodegradable material is completely uniform in order to facilitate the desired fermentation process.
● High permeability to water vapor, which cooperates to dry quickly wet types of waste. That is, if the moisture in the waste evaporates through the textile compound, the drying process is enhanced.
● High impermeability to water, which prevents precipitation - that is, rain water - from penetrating through the textile compound and allowing the material to release humidity outside and withstand the meteorological conditions of the area.
● High resistance to traction, which allows it to withstand internal overpressure forces as well as the loads caused by wind, rain and snow wherever they are installed.
● Regular functionality, that is, the textile compound performs equally at all points and in any environmental condition since the tarpaulin as a whole will be outdoors both in winter as in summer and will suffer significant thermal variations, therefore ensuring the textile compound performs equally at all points becomes a necessity.

In addition to these characteristics and/or properties the tarpaulin object of the invention presents as fundamental innovative characteristics those listed below:
1. Fire-resistant finishing, for avoiding or preventing fire from starting or propagating.
2. Antibacterial, for avoiding or preventing bacteria and fungus proliferation.
3. Quadrille weave for the taslan yarn used for providing high resistance against friction forces and/or puncturing elements

### BRIEF DESCRIPTION OF THE DRAWINGS

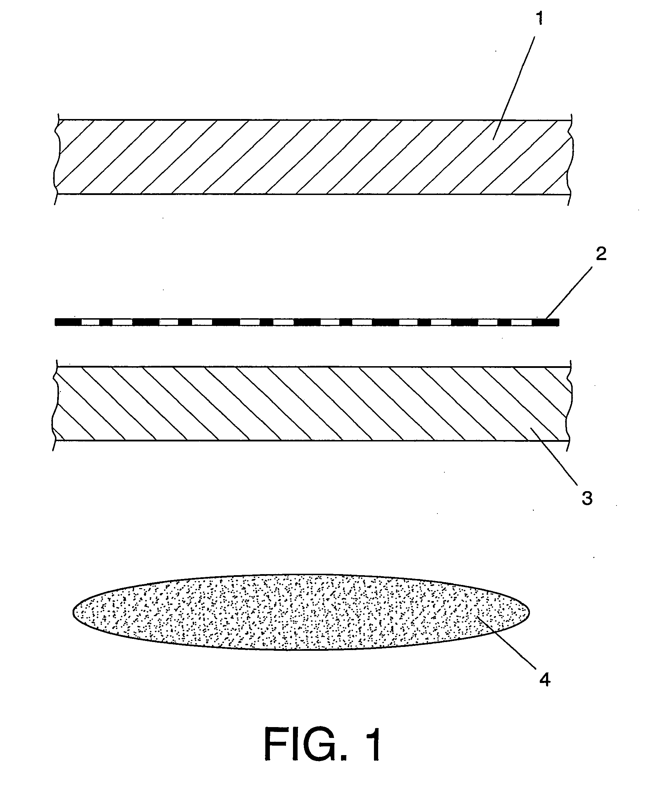

To complement the following description and to aid in a better understanding of the characteristics of the invention the following sole drawings page is attached to the this descriptive report depicting the following:

The sole figure represented in the drawings page is a schematic view showing exploded sections of the three layers that comprise the compost covering tarpaulin object of the invention.

### DESCRIPTION OF THE EMBODIMENT OF THE INVENTION

As shown in the aforementioned figure the tarpaulin intended for covering the biodegradable material and thus promote the composting process of said material to obtain compost -an agricultural fertilizer - comprises an upper layer 1, an intermediate layer 2, and a lower layer 3, the latter layer being the one in contact and superimposed on the corresponding biodegradable material 4 intended to be fermented, that is, forming the lower face of the structure, while layer 1 forms the upper face of the same structure or tarpaulin.

The upper layer 1 and lower layer 3 are made in polyester fabric of high tenacity taslan yarn and quadrille weave and have water repellent, fire resistant and antibacterial characteristics as well as high air and water vapor permeability, high resistance to traction and high permeability (sic) to rain water.

Intermediate layer 2 is embodied by a membrane having breathable and impermeable properties for promoting the fermentation process required to compost the material 4.

## Claims

1. Tarpaulin for covering biodegradable material intended to promote composting of biodegradable material and thus achieve decomposing it to obtain an agricultural fertilizer and **characterized in that** it comprises a textile structure composed by superimposing three layers (1, 2 and 3), in which layer (1) corresponds to the lower face of the structure to be laid on the biodegradable material (4), layer (3) is the lower layer or face that rests on said biodegradable material (4), both upper (1) and lower (3) layers being constituted by taslan yarn and treated with products that render it fire resistant, water repellent and antibacterial while the intermediate layer (2) comprises a breathable membrane that is also impermeable to water.

2. Tarpaulin for covering biodegradable material according to claim 1, **characterized in that** the upper layer (1) is made of high tenacity polyester fabric, dyed and fixed.

3. Tarpaulin for covering biodegradable material according to claim 1, **characterized in that** the lower layer (3) is made of high tenacity polyester fabric washed and fixed.

4. Tarpaulin for covering biodegradable material according to any of above claims, **characterized in that** the fire-resistant product applied to the upper (1) and lower (3) layers is applied by a foularding process using a thermosol system to attain a permanent finish.

5. Tarpaulin for covering biodegradable material according to any claim 1 to 3, **characterized in that** the antibacterial product applied to the structure is applied by a foularding process.

6. Tarpaulin for covering biodegradable material according to any of claims 1 to 3, **characterized in that** the taslan yarns that constitute the upper (1) and lower (3) layers have small air chambers that retain bad smelling particles.

7. Tarpaulin for covering biodegradable material according to any of claims 1 to 3, **characterized in that** the weave of the taslan yarns that constitute the upper (1) and lower (3) is a quadrille weave
